# EUROPÄISCHE PATENTSCHRIFT

(11) **EP 0 311 754 B1**
(45) Veröffentlichungstag und Bekanntmachung des Hinweises auf die Patenterteilung: **06.10.1993**
(21) Anmeldenummer: 88111282.5
(22) Anmeldetag: 14.07.1988
(51) Int. Cl.: H04M 3/56, H04R 3/00

(54) **Konferenz-Freisprecheinrichtung**
Hands off speech conferencing device
Dispositif pour conférence à main-libre

(30) Priorität: 12.10.1987 DE 3734447
(43) Veröffentlichungstag der Anmeldung: 19.04.1989
(73) Patentinhaber: TELENORMA GMBH, 60326 Frankfurt am Main (DE)
(72) Erfinder: Gierlich, Hans Wilhelm, Dipl.-Ing., D-5100 Aachen (DE)

(56) Entgegenhaltungen:
- EP-A- 0 014 044
- WO-A-80/01529
- FR-A- 2 377 735
- US-A- 3 814 856
- US-A- 3 992 584
- US-A- 4 008 376
- PATENT ABSTRACTS OF JAPAN, Band 9, Nr. 106 (E-313)[1829], 10. Mai 1985 & JP-A-59 230 356
- PATENT ABSTRACTS OF JAPAN, Band 12, Nr. 77 (E-589)[2924], 10. März 1988 & JP-A-62 216 462

## Beschreibung

Die Erfindung betrifft eine Konferenz-Freisprecheinrichtung sowie ein Verfahren zum Betreiben derselben, bei welcher die von mehreren Mikrofonen mit Richtcharakteristik eintreffenden Signale einer Steuereinrichtung zugeführt werden, wobei durch die Steuereinrichtung die Signale desjenigen Mikrofons auf eine Übertragungsstrecke durchgeschaltet werden, welches einer sprachförmigen Signalquelle am nächsten ist und die von einer Übertragungsstrecke eintreffenden Signale einem Lautsprecher zugeführt werden.

Eine derartige Konferenz-Freisprecheinrichtung ist bereits bekannt. So wird in der DE-OS 36 12 708 eine Mikrofon- und Lautsprecheranordnung zur Verwendung in einem Fernkonferenzsystem beschrieben, in welchem ein Anzahl von Mikrofonen in einer festen Beziehung zu einem Lautsprecher gehalten sind. Dabei werden die Mikrofone unabhängig eingeschaltet in Abhängigkeit von Sprache, die von dem Mikrofon aufgenommen ist, einem Lautsprechersignal zur Speisung des Lautsprechers und einem elektrischen Signal, welcher zu Mikrofonsignalen der anderen zugehörigen Mikrofone in Beziehung steht. Ein Geräuschanpassungsschwellwertkreis erzeugt einen Spannungspegel, welcher repräsentativ für das Hintergrundgeräusch ist und der mit dem Mikrofonsignal des jeweiligen Mikrofons verglichen wird, um zu bestimmen, ob das Mikrofon Sprache empfängt. Eine Entscheidungsschaltung überwacht das Mikrofonsignal des zugehörigen Mikrofons in Bezug zu einer Verbindungsschiene, die Mikrofonsignale führt, die repräsentativ für den Pegel von Mikrofonsignalen an anderen Mikrofonen sind. Die Entscheidungsschaltung erzeugt ein Signal, das anzeigt, daß das zugehörige Mikrofon das lauteste Mikrofonsignal hat.

Bei dem bekannten Mikrofonsystem wird mit Hilfe eines Geräuschanpassungsschwellwertkreises ein Spannungspegel erzeugt, welcher für das Hintergrundgeräusch charakteristisch ist und zur Erkennung von Sprachsignalen herangezogen wird, indem der Spannungspegel mit dem Pegel des Mikrofonsignals verglichen wird. Dabei wird von der Voraussetzung ausgegangen, daß der Pegel des Sprachsignals immer höher als der Pegel des Hintergrundgeräuschs sein muß, da sonst eine Erkennung von Sprache nicht möglich ist.

In der US-PS 3,992,584 wird eine automatische Mikrofonmischeinrichtung beschrieben, bei welcher mehrere Mikrofone mit einem gemeinsamen Lautsprecher verbunden sind. Durch eine Steuereinrichtung wird ein Referenzsignal erzeugt, dessen Größe proportional der Summe der Amplituden der Mikrofonsignale ist, wobei eine Vielzahl von Steuersignalen erzeugt werden, die jeweils eine Größe entsprechend der Amplitude eines Mikrofonsignals aufweisen. Für jedes Mikrofon ist eine Lautstärkeregelung vorhanden, durch welche die Verstärkung des Mikrofonsignals in Abhängigkeit vom Verhältnis eines Steuersignals zum Referenzsignal geregelt wird. Besondere Maßnahmen zur Unterscheidung zwischen Hintergrundgeräusch und Sprachsignalen werden nicht getroffen, außerdem handelt es sich bei der automatischen Mikrofonsignalmischeinrichtung nicht um eine Konferenzfreisprecheinrichtung, da die Mikrofonsignale nicht einer Übertragungsstrecke zugeführt werden.

Die Bandpaßfilterung von Mikrofonsignalen ist bereits bekannt, so wird in der internationalen Patentanmeldung WO 80/01529 ein Audiosystem beschrieben, bei welchem die Mikrofonsignale einem Bandpaßfilter zugeführt werden, dessen Frequenzbereich zwischen 10 Hz und 5 KHz liegt. Ein derartiges Bandpaßfilter ist nicht geeignet, die Sprachgrundfrequenz auszufiltern.

Die Aufgabe der Erfindung besteht nun darin, eine Konferenz-Freisprecheinrichtung anzugeben, bei welcher eindeutig zwischen Hintergrundgeräusch und Sprachsignalen unterschieden werden kann, auch dann, wenn der Pegel des Sprachsignals unterhalb des Geräuschsignalpegels liegt.

Diese Aufgabe wird dadurch gelöst, daß aus den im Bereich der Sprachgrundfrequenz bandpaßgefilterten Mikrofonsignalen und aus dem raumgeräusch-abhängiggeregelten Mikrofon-Summensignal die Einhüllende von Sprache detektiert wird, daß die bandpaßgefilterten Mikrofonsignale bezüglich ihres Pegels überwacht werden und daß das Mikrofonsignal mit dem höchsten Pegel in Abhängigkeit vom Detektionssignal der Einhüllenden von Sprache auf die Übertragungsstrecke weitergegeben wird.

Aus dem Mikrofonsummensignal wird zunächst die Einhüllende von Sprache detektiert, und zwar unabhängig davon, von welchem Mikrofon das Sprachsignal aufgenommen wird. Die Weitergabe desjenigen Mikrofonsignals mit dem höchsten Pegel wird dann davon abhängig gemacht, ob ein Sprachsignal vorhanden ist oder nicht.

Weitere Vorteile ergeben sich aus den abhängigen Ansprüchen.

Die Erfindung wird anhand eines Ausführungsbeispiels näher erläutert, welches in der Zeichnung dargestellt ist.

Es zeigt:
- Fig. 1: eine Mikrofon-Lautsprecheranordnung, bei welcher die Lautsprecher in einem gemeinsamen Gehäuse oberhalb der Mikrofone angebracht sind,
- Fig. 2: eine Mikrofon-Lautsprecheranordnung, bei welcher die Lautsprecher in einem gemeinsamen Gehäuse unterhalb der Mikrofone angebracht sind
und
- Fig. 3: ein Blockschaltbild für eine Konferenz-Freisprecheinrichtung.

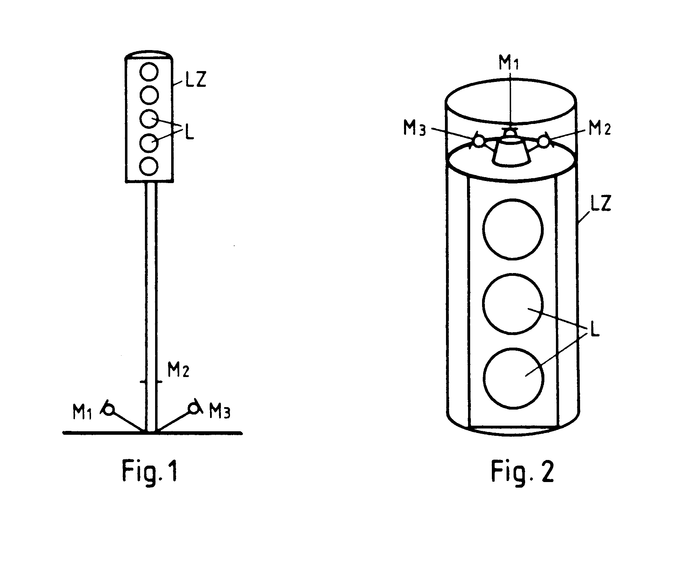

Bei den in Fig. 1 und Fig. 2 gezeigten Mikrofon-Lautsprecheranordnungen sind die eine Richtcharakteristik aufweisenden Mikrofone M1 bis M3 jeweils im Winkel von 120 Grad zueinander in einer Ebene angeordnet. Die Lautsprecher L sind in einem gemeinsamen Gehäuse LZ übereinander in einer Reihe untergebracht, wobei sämtliche Lautsprecher das gleiche Signal erhalten.

Wie in Fig. 1 und Fig. 2 dargestellt, kann das Gehäuse LZ entweder oberhalb der Mikrofone M1 bis M3 oder auch unterhalb der Mikrofone M1 bis M3 angebracht sein. Bei der Anordnung in Fig. 1 befinden sich die Mikrofone M1 bis M3 oberhalb einer Tischplatte, während in Fig. 2 das Gehäuse LZ dem Fußboden stehen kann.

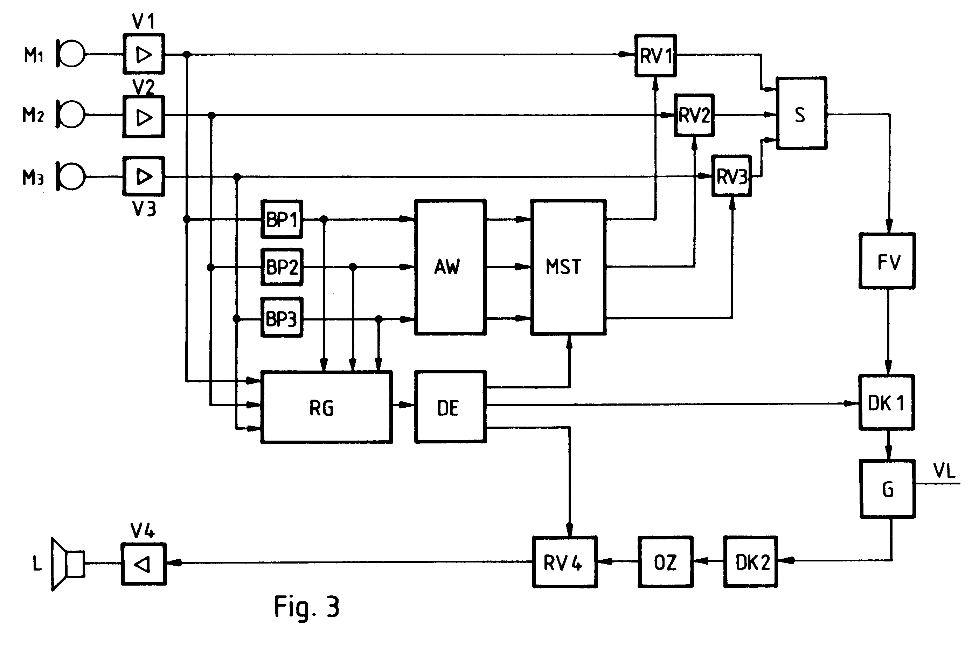

Bei dem in Fig. 3 gezeigten Blockschaltbild wird davon ausgegangen, daß drei Mikrofone M1 bis M3 und ein oder mehrere Lautsprecher L vorhanden sind, wobei nur ein Lautsprecher L gezeigt wird. Die Erfindung ist jedoch auch auf andere Mikrofon- bzw. Lautsprecherkombinationen anwendbar.

Die Mikrofonsignale der Mikrofone M1 bis M3 werden durch fest zugeordnete Verstärker V1 bis V3 verstärkt, an denen die Regelverstärker RV1 bis RV3, die Bandpaßfilter BP1 bis BP3 und eine auf das Raumgeräusch ansprechende Regeleinrichtung RG angeschlossen ist. Die Ausgänge der Bandpaßfilter BP1 bis BP3 sind sowohl mit einer Auswerteschaltung AW als auch mit der auf das Raumgeräusch ansprechenden Regeleinrichtung RG verbunden. An Letzterer ist ein Detektor DE für die Einhüllende von Sprache verbunden, welcher ein Freigabesignal an die mit der Auswerteschaltung AW verbunden Mikrofon-Steuereinrichtung MST liefert. Die Mikrofon-Steuereinrichtung MST liefert Steuersignale für die Regelverstärker RV1 bis RV3, deren Ausgänge über eine Summenschaltung S zusammengefäßt sind.

Am Ausgang Summenschaltung S ist eine Einrichtung zur Frequenzverschiebung FV und an dieser ein Dynamik-Kompressor DK1 angeschlossen, welcher ebenfalls von dem Detektor DE steuerbar ist. Das Ausgangssignal des Dynamik-Kompressors DK1 wird einer Gabel G zugeführt und gelangt von dort auf die Übertragungsleitung VL. Die von der Übertragungsleitung VL eintreffenden Lautsprechersignale werden einem weiteren Dynamik-Kompressor DK2 und einer Einrichtung zur Obertonerzeugung OZ zugeführt, wobei die Ausgangssignale der Einrichtung OZ einem Regelverstärker RV4 zugeführt werden, welcher ebenfalls am Detektor DE angeschlossen ist. Das Ausgangssignal des Regelverstärkers RV wird einem Lautsprecherverstärker V4 zugeführt und dient zur Steuerung des Lautsprechers L.

Die durch die Verstärker V1 bis V3 verstärkten Mikrofon-Signale der Mikrofone M1 bis M3 werden in der Einrichtung RG zunächst summiert und dann einem Spitzenwertgleichrichter zugeführt, welcher durch die entsprechende Beschaltung eine langsame Anstiegskonstante von 4,7 Sek. und eine schnelle Abfallzeitkonstante von 4,7 ms aufweist. Das Steuersignal wird einem Regelverstärker der Einrichtung RG zugeführt, an dessen Eingang das bandpaßgefilterte Summensignal der Mikrofone anliegt. Die Bandpaßfilter BP1 bis BP3 weisen eine untere Grenzfrequenz von 100 Hz und eine obere Grenzfrequenz von 300 Hz auf. Mit diesen Filtern wird der Bereich der Sprachgrundfrequenz herausgefiltert. Das Ausgangssignal der Einrichtung RG wird dem Detektor DE zugeführt. Der Detektor für die Einhüllende von Sprache DE besteht aus einem aus einem Vollweggleichrichter und nachgeschalteten Tiefpaßfilter gebildeten AM-Demodulator. Die Grenzfrequenz des Tiefpaßfilters ist dabei auf 20 Hz festgelegt, so daß die Einhüllende von Sprache, deren Maximum im Frequenzbereich bei ca. 5 Hz liegt, detektiert werden kann. Das von einer Schwellwertschaltung überwachte Ausgangssignal wird zwei Zeitstufen zugeführt, wobei die eine Zeitstufe eine Ansprechverzögerung von 40-120 ms hat, um Störungen durch kurze Impulse auszuschließen und einer weiteren Zeitstufe zugeführt, welche eine Abfallverzögerung 0,4-1,4 s aufweist, wodurch das Abschalten des Mikrofonsignals bei stimmlosen Lauten und kurzen Sprachpausen verhindert wird. Das derart behandelte Ausgangssignal des Detektors DE wird anschließend den Einrichtungen MST, DK1 und RV4 zugeführt.

Wie bereits erwähnt, gelangen die bandpaßgefilterten Mikrofonsignale auch in die Auswerteschaltung AW, wo zunächst das Signal jedes Mikrofons gleichgerichtet und anschließend einer Vergleichseinrichtung zugeführt wird. Hier erfolgt durch Vergleich der Signale der einzelnen Mikrofone die Bestimmung desjenigen Mikrofonsignals mit dem höchsten Pegel, wobei die Kennzeichnung des jeweiligen Mikrofons in digitaler Form am Ausgang der Auswerteschaltung AW durch Markierung der mikrofonindividuellen Leitung durchgeführt wird. Bei 3 Mikrofonen kann also immer eine Leitung den einen Pegel, und zwar die das Mikrofon mit dem höchsten Pegel kennzeichnende Leitung und die beiden anderen Leitungen* das Signal mit dem anderen Pegel führen. Diese Signale werden der Mikrofonsteuereinrichtung MST zugeführt, wobei in der Mikrofonsteuereinrichtung MST eine Verknüpfung des das Mikrofon mit dem höchsten Pegel kennzeichnenden Signals mit dem Ausgangssignal des Detektors DE erfolgt, so daß am Ausgang der Mikrofonsteuereinrichtung MST nur dann ein dasjenige Mikrofon mit dem höchsten Pegel kennzeichnendes Signal auftritt, wenn es sich **bei** dessen Mikrofonsignal um ein Sprachsignal handelt. Mit Hilfe der Ausgangssignale der Mikrofonsteuereinrichtung MST werden die Regelverstärker RV1 bzw. RV2 bzw. RV3 gesteuert, und zwar derart, daß die Verstärkung eines Sprache enthaltenden Mikrofonsignals um 10-25 dB angehoben wird, während die Verstärkung der Mikrofonsignale bei fehlendem Sprachsignal um 5-15 dB reduziert wird. Das Ausgangssignal der Regelverstärker RV1 bis RV3 wird einer Summierschaltung S zugeführt, welche außerdem den Frequenzbereich der Mikrofonsignale auf 300 Hz bis 3,4 kHz begrenzt.
* oder auch sämtliche Leitungen

Die in der beschriebenen Weise entstandene Summe der Mikrofonsignale wird einer Einrichtung zur Frequenzverschiebung FV zugeführt, in welcher das Eingangssignal einer Frequenzverschiebung in einer Größenordnung von 5 bis 10 Hz unterworfen wird, wobei die Frequenzverschiebung in Abhängigkeit von der Raumgröße wählbar ist. Dabei läßt sich das um fₒ frequenzverschobene Ausgangssignal folgendermaßen darstellen:

Der Imaginärteil von sₐ(t) wird durch Phasenverschiebung des Eingangssignals um - 90 Grad, die Modulation mit sin (2 fₒt) bzw. mit cos (2 fₒt) erfolgt durch Multiplikation des Eingangssignals mit der einstellbaren Trägerfrequenz fₒ.

Zur Begrenzung der Dynamik der Mikrofonsignale, die durch unterschiedliche Sprecher oder Sprecherabstände stark variieren kann, wird ein Dynamik-Kompression der Ausgangssignale der Einrichtung zur Frequenzverschiebung FV vorgenommen. Dabei erfolgt die Steuerung der Stummschaltung des Dynamik-Kompressors DK1 durch das Ausgangssignal des Detektors für die Einhüllende von Sprache DE, wobei nur bei Vorliegen eines Sprachsignals der Dynamik-Kompressor aktiviert wird. Damit wird eine Steuerung des Dynamik-Kompressors durch Störsignale verhindert, wenn die Steuerung des Dynamik-Kompressors in bekannter Weise durch Ableitung einer Regelgröße aus dem Eingangssignal desselben erfolgen würde, wie dies bei dem in den Empfangszweig eingefügten Dynamik-Kompressor DK2 der Fall ist. Dieser dient zur Kompensation von Leitungsverlusten und zur Begrenzung der Dynamik des Lautsprechersignals.

Der Ausgang des Dynamik-Kompressors DK2 ist mit dem Eingang einer Einrichtung zur Obertonerzeugung OZ verbunden. Diese ermöglicht die Erzeugung harmonischer Obertöne zum empfangenen Signal, die aufgrund der Frequenzbegrenzung des Nutzsignals auf 3,4 kHz weggefiltert werden. Hierzu wird das hochpaßgefilterte Eingangssignal einem als Modulator wirkenden Operationsverstärker zugeführt, dessen Verstärkung zusätzlich durch eine aus dem hochpaß-gefilterten und gleichgerichteten Eingangssignal gewonnene Gleichspannung beeinflußt wird. Die auf diese Weise erzeugten gradzahligen Oberwellen zum Eingangssignal werden demselben zugemischt und anschließend einem Regelverstärker RV4 zugeführt. Dieser wird dabei derart durch ein Ausgangssignal des Detektors für die einhüllende Sprache DE gesteuert, daß bei fehlendem Mikrofonsignal das Signal für den Lautsprecher L um 5-20 dB angehoben und bei vorhandenem Mikrofonsignal um 5-15 dB abgesenkt wird.

Die angegebenen Zeit- und Dämpfungswerte sind nur beispielhaft zu verstehen.

Die Erfindung ist nicht nur auf die im Anwendungsbeispiel beschriebene Mikrofon- und Lautsprecherkonfiguration beschränkt, es können auch mehr oder weniger Mikrofone und/oder Lautsprecher gemäß der Erfindung benutzt werden.

## Patentansprüche

1. Verfahren für eine Konferenz-Freisprecheinrichtung, bei welchem die von mehreren Mikrofonen mit Richtcharakteristik eintreffenden Signale einer Steuereinrichtung zugeführt werden, wobei durch die Steuereinrichtung die Signale desjenigen Mikrofons auf eine Übertragungsstrecke durchgeschaltet werden, welches einer sprachförmigen Signalquelle am nächsten ist und die von einer Übertragungsstrecke eintreffenden Signale einem Lautsprecher zugeführt werden,
**dadurch gekennzeichnet,**
daß aus den im Bereich der Sprachgrundfrequenz bandpaßgefilterten Mikrofonsignalen und aus dem raumgeräusch-abhängiggeregelten Mikrofon-Summensignal die Einhüllende von Sprache detektiert wird, daß die bandpaßgefilterten Mikrofonsignale bezüglich ihres Pegels überwacht werden und daß das Mikrofonsignal mit dem höchsten Pegel in Abhängigkeit vom Detektionssignal der Einhüllenden von Sprache auf die Übertragungsstrecke weitergegeben wird.

2. Verfahren nach Anspruch 1,
**dadurch gekennzeichnet,**
daß das Detektionssignal der Einhüllenden von Sprache ansprechverzögert ist.

3. Verfahren nach einem der Ansprüche 1 oder 2,
**dadurch gekennzeichnet,**
daß das Detektionssignal der Einhüllenden von Sprache abfallverzögert ist.

4. Verfahren nach einem der Ansprüche 1 bis 3,
**dadurch gekennzeichnet,**
daß das Signal für den Lautsprecher bei Vorhandensein des Detektionssignals der Einhüllenden von Sprache gedämpft wird.

5. Verfahren nach einem der Ansprüche 1 bis 4,
**dadurch gekennzeichnet,**
daß bei Vorhandensein des Detektionssignales der Einhüllenden von Sprache das weiterzugebende Mikrofonsignal einer Dynamik-Kompression unterworfen wird.

6. Konferenz-Freisprecheinrichtung zur Durchführung des Verfahrens nach einem der Ansprüche 1 bis 5, wobei mehrere Mikrofone mit Richtcharakteristik und ein Lautsprecher und eine Steuereinrichtung zur Steuerung der Durchschaltung der Signale auf eine Übertragungsstrecke desjenigen der Mikrofone vorhanden sind, welches einer sprachförmigen Schallquelle am nächsten ist,
**dadurch gekennzeichnet,**
daß die Mikrofone (M1 bis M3) jeweils mit einem fest zugeordneten Bandpaßfilter (BP) für die Sprachgrundfrequenz verbunden sind, dessen Ausgang sowohl mit einer Auswerteschaltung (AW) als auch mit einer auf das Raumgeräusch ansprechenden Regeleinrichtung (RG) verbunden ist, daß ein Summensignalausgang derselben mit einem Detektor (DE) für die Einhüllende von Sprache verbunden ist, daß der Detektionssignalausgang des Detektors (DE) an einer Mikrofon-Steuereinrichtung (MST) angeschlossen ist, welche mit der Auswerteschaltung (AW) mikrofonleitungsindividuell verbunden ist, wobei in der Auswerteschaltung (AW) diejenige Mikrofonleitung mit dem höchsten Signalpegel gekennzeichnet wird, daß die Mikrofonsteuereinrichtung (MST) an den, den Mikrofonen (M1 bis M3) zugeordneten Regelverstärkern (RV1 bis RV3) angeschlossen ist und daß das Ausgangssignal der Regelverstärker (RV1 bis RV3) über eine Summierschaltung (S) einer Einrichtung zur Frequenzverschiebung (FV) zugeführt wird, deren Ausgang an einer Einrichtung zur Dynamik-Kompression (DK1) angeschlossen ist, welche durch das Ausgangssignal des Detektors (DE) gesteuert wird, wobei das Ausgangssignal der Einrichtung zur Dynamik-Kompression (DK1) der Übertragungsstrecke (VL) zugeführt wird.

7. Konferenz-Freisprecheinrichtung nach Anspruch 6,
**dadurch gekennzeichnet,**
daß das Lautsprechersignal einer weiteren Einrichtung zur Dynamik-Kompression (DK2) und anschließend einer Einrichtung zur Obertonerzeugung (OZ) zugeführt wird.

8. Konferenz-Freisprecheinrichtung nach Anspruch 7,
**dadurch gekennzeichnet,**
daß der Ausgang der Einrichtung zur Obertonerzeugung (OZ) an einem Regelverstärker (RV4) angeschlossen ist, welcher durch das Ausgangssignal des Detektors (DE) gesteuert wird.

9. Konferenz-Freisprecheinrichtung nach einem der Ansprüche 6 bis 8,
**dadurch gekennzeichnet,**
daß das Ausgangssignal des Detektors (DE) durch eine Zeitstufe um 40 bis 120 ms ansprechverzögert ist.

10. Konferenz-Freisprecheinrichtung nach einem der Ansprüche 6 bis 8,
**dadurch gekennzeichnet,**
daß das Ausgangssignal des Detektors (DE) durch eine Zeitstufe um 0,4 bis 1,4 s abfallverzögert ist.

11. Konferenz-Freisprecheinrichtung nach einem der Ansprüche 6 bis 10,
**dadurch gekennzeichnet,**
daß durch das Ausgangssignal der Mikrofon-Steuereinrichtung (MST) die Regelverstärker (RV1 bis RV3) derart gesteuert werden, daß die Verstärkung um 5 bis 15 dB reduziert und bei Vorliegen eines Ausgangssignals die Verstärkung um 10 bis 25 dB angehoben wird.

12. Konferenz-Freisprecheinrichtung nach Anspruch 8,
**dadurch gekennzeichnet,**
daß der Regelverstärker (RV4) des Lautsprechersignals bei fehlendem Sprachsignal um 5 bis 20 dB angehoben und bei vorhandenem Sprachsignal um 5 bis 15 dB abgesenkt wird.

13. Konferenz-Freisprecheinrichtung, bei welcher drei Mikrofone im Winkel von je 120 Grad zueinander in einer Ebene angeordnet sind, nach Patentanspruch 6,
**dadurch gekennzeichnet,**
daß mehrere Lautsprecher (L) in einer Reihe übereinander im einem gemeinsamen Gehäuse (LZ) angeordnet sind und das Gehäuse unterhalb oder oberhalb der Mikrofone (M1 bis M3) angebracht ist.

14. Konferenz-Freisprecheinrichtung nach einem der Ansprüche 6 bis 13,
**dadurch gekennzeichnet,**
daß mehrere Mikrofon-Lautsprechereinheiten derart kombiniert werden können, daß die Auswahl des zuzuschaltenden Mikrofons aus allen vorhandenen Mikrofonen getroffen wird.

## Claims

1. Method for a hands-free conference sound distribution equipment, in which the signals coming in from several microphones with directional characteristics are fed to a control equipment, wherein the signals of that microphone are switched by the control equipment through to a transmission path, which is nearest to a speech-like signal source, and the signals coming in from a transmission path are fed to a loudspeaker, characterised thereby, that the speech envelope is detected from the microphone signals which have been band-pass filtered in the range of the fundamental speech frequency and from the microphone sum signal which has been regulated in dependence on background noise, that the band-pass-filtered microphone signals are monitored in respect of their level and that the microphone signal with the highest level is passed on to the transmission path in dependence on the detection signal from the speech envelope.

2. Method according to claim 1, characterised thereby, that the detection signal of the speech envelope is delayed in response.

3. Method according to one of the claims 1 and 2, characterised thereby, that the detection signal of the speech envelope is delayed in decay.

4. Method according to one of the claims 1 to 3, characterised thereby, that the signal for the loudspeaker is attenuated in the presence of the detection signal of the speech envelope.

5. Method according to one of the claims 1 to 4, characterised thereby, that the microphone signal to be passed on is subjected to a dynamic compression in the presence of the detection signal of the speech envelope.

6. Hands-free conference sound distribution equipment for the performance of the method according to one of the claims 1 to 5, wherein several microphones with directional characteristics and a loudspeaker as well as a control equipment for the control of the switching of the signals of that one of the microphones through to a transmission path, which is nearest to a speech-like signal source, are present, characterised thereby, that the microphones (M1 to M3) are each connected with a respective fixedly associated band-pass filter (BP) for the fundamental speech frequency, the output of which filter is connected with an evaluating circuit (AW) as well as also with a regulating equipment (RG) responding to the background noise, that a sum signal output of the same is connected with a detector (DE) for the speech envelope, that the detection signal output of the detector (DE) is connected to a microphone control equipment (MST), which is connected with the evaluating circuit (AW) individually for each microphone line, wherein the microphone line with the highest signal level is identified in the evaluating circuit (AW), that the microphone control equipment (MST) is connected to the regulating amplifiers (RV1 to RV3) associated with the microphones (M1 to M3) and that the output signal of the regulating amplifiers (RV1 to RV3) is fed by way of a summing circuit (5) to a frequency-shifting equipment (FV), the output of which is connected to a dynamic compression equipment (DK1), which is controlled by the output signal of the detector (DE), wherein the output signal of the dynamic compression equipment (DK1) is fed to the transmission path (VL).

7. Hands-free conference sound distribution equipment according to claim 6, characterised thereby, that the loudspeaker signal is fed to a further dynamic compression equipment (DK2) and subsequently to an overtone-generating equipment (OZ).

8. Hands-free conference sound distribution equipment according to claim 7, characterised thereby, that the output of the overtone-generating equipment (OZ) is connected to a regulating amplifier (RV4), which is controlled by the output signal of the detector (DE).

9. Hands-free conference sound distribution equipment according to one of the claims 6 to 8, characterised thereby, that the output signal of the detector (DE) is delayed in response by 40 to 120 milliseconds by a timing stage.

10. Hands-free conference sound distribution equipment according to one of the claims 6 to 8, characterised thereby, that the output signal of the detector (DE) is delayed in decay by 0.4 to 1.4 seconds by a timing stage.

11. Hands-free conference sound distribution equipment according to one of the claims 6 to 10, characterised thereby, that the regulating amplifiers (RV1 to RV3) are controlled by the output signal of the microphone control equipment (MST) in such a manner that the amplification is reduced by 5 to 15 decibels and that the amplification is increased by 10 to 25 decibels in the presence of an output signal.

12. Hands-free conference sound distribution equipment according to claim 8, characterised thereby, that the regulating amplifier (RV4) of the loudspeaker signal is raised by 5 to 20 decibels when the speech signal is absent and lowered by 5 to 15 decibels when the speech signal is present.

13. Hands-free conference sound distribution equipment, in which three microphones are arranged at an angle one at 120 degrees to the other in one plane, according to claim 6, characterised thereby, that several loudspeakers (L) are arranged in a row one above the other in a common housing (LZ) and that the housing is mounted above or below the microphones (M1 to M3).

14. Hands-free conference sound distribution equipment according to one of the claims 6 to 13, characterised thereby, that several microphone-loudspeaker units can be combined in such a manner that the selection of the microphone, which is to be switched in, is made from all microphones present.

## Revendications

1. Procédé pour un dispositif de conversation pour conférence à mains libres, selon lequel les signaux, qui arrivent de plusieurs microphones avec une caractéristique directive, sont envoyés à un dispositif de commande grâce auquel les signaux du microphone, qui est le plus proche d'une source de signaux en forme de signaux vocaux, sont transmis à une section de transmission, et les signaux, qui arrivent à la section de transmission, sont envoyés à un haut-parleur, caractérisé en ce que l'enveloppe des signaux vocaux est détectée à partir des signaux des microphones, qui sont filtrés au moyen d'un filtrage passe-bande dans la gamme des fréquences vocales de base et à partir du signal somme des microphones, qui est réglé en fonction du bruit ambiant, que le niveau des signaux des microphones, qui sont filtrés au moyen d'un filtrage passe-bande est contrôlé et que le signal d'un microphone, qui possède le niveau maximum, est retransmis à la section de transmission, en fonction du signal de détection de l'enveloppe de signaux vocaux.

2. Procédé selon la revendication 1, caractérisé en ce que le signal de détection de l'enveloppe de la parole est retardé au niveau de la réponse.

3. Procédé selon l'une des revendications 1 ou 2, caractérisé en ce que le signal de détection de l'enveloppe est retardé au niveau de la transition retombante.

4. Procédé selon l'une des revendications 1 à 3, caractérisé en ce que le signal pour le haut-parleur est affaibli lors de la présence du signal de détection de l'enveloppe des signaux vocaux.

5. Procédé selon l'une des revendications 1 à 4, caractérisé en ce que dans le cas de la présence du signal de détection de l'enveloppe de la parole, le signal d'un microphone, qui doit être retransmis, est soumis à une compression dynamique.

6. Dispositif de conversation pour conférence à mains libres pour la mise en oeuvre du procédé selon l'une des revendications 1 à 5, dans lequel il est prévu plusieurs microphones possédant une caractéristique directive et un haut-parleur et un dispositif de commande pour commander la transmission des signaux à une section de transmission de celui des microphones, qui est le plus proche d'une source acoustique délivrant des signaux en forme de signaux vocaux, caractérisé en ce que les microphones (M1 à M3) sont raccordés respectivement à un filtre passe-bande (BP) associé de façon fixe et servant à filtrer la fréquence vocale de base et dont la sortie est raccordée aussi bien au circuit d'évaluation (AW) qu'à un dispositif de régulation (RG), qui répond au bruit ambiant, qu'une sortie du signal somme de ce dispositif est raccordée à un détecteur (DE) détectant l'enveloppe des signaux vocaux, que la sortie du signal de détection du détecteur (DE) est raccordée à un dispositif (MST) de commande des microphones, qui est raccordé, pour chaque ligne d'un microphone, au circuit d'évaluation (AW), dans lequel la ligne du microphone, qui délivre le signal possédant le niveau maximum, est caractérisée, que le dispositif (MST) de commande des microphones est raccordé aux amplificateurs de réglage (RV1 à RV3), qui sont associés aux microphones (M1 à M3), et que le signal de sortie des amplificateurs de régulation (RV1 à RV3) est envoyé par l'intermédiaire d'un circuit additionneur (S) à un dispositif servant à réaliser un décalage de fréquence (FV) dont la sortie est raccordée à un dispositif servant à réaliser une compression dynamique (DK1), qui est commandée par le signal de sortie du détecteur (DE), le signal de sortie du dispositif de compression dynamique (TK1) étant envoyé à la section de transmission (VL).

7. Dispositif de conversation pour conférence à mains libres selon la revendication 6, caractérisé en ce que le signal du haut-parleur est envoyé à un autre dispositif de compression dynamique (DK2), puis à un dispositif de production d'harmoniques supérieurs (OZ).

8. Dispositif de conversation pour conférence à mains libres selon la revendication 7, caractérisé en ce que la sortie du dispositif de production d'harmoniques supérieurs (OZ) est raccordée à un amplificateur de réglage (RV4), qui est commandé par le signal de sortie du détecteur (DE).

9. Dispositif de conversation pour conférence à mains libres selon l'une des revendications 6 à 8, caractérisé en ce que le signal de sortie du détecteur (DE) est retardé au niveau de la réponse, d'une durée comprise entre 40 et 120 ms.

10. Dispositif de conversation pour conférence à mains libres selon l'une des revendications 6 à 8, caractérisé en ce que le signal de sortie du détecteur (DE) est retardé au niveau de la transition la retombante, d'une durée de 0,4 à 1,4 s.

11. Dispositif de conversation pour conférence à mains libres selon l'une des revendications 6 à 10, caractérisé en ce que le signal de sortie du dispositif (MST) de commande des microphones commande les amplificateurs de réglage (RV1 à RV3) de telle sorte que l'amplification est réduite de 5 à 15 dB et que, dans le cas de la présence d'un signal de sortie, l'amplification est accrue de 10 à 25 dB.

12. Dispositif de conversation pour conférence à mains libres selon la revendication 8, caractérisé en ce que l'amplificateur de réglage (RV4) du signal du hautparleur est accru de 5 à 20 dB en l'absence d'un signal vocal et est réduit de 5 à 15 dB dans le cas de la présence d'un signal vocal.

13. Dispositif de conversation pour conférence à mains libres, dans lequel trois microphones sont disposés dans un plan en étant réciproquement séparés d'un angle de 120 degrés, selon la revendication 6, caractérisé en ce que plusieurs hauts-parleurs (L) sont disposés suivant une rangée en superposition dans un boîtier commun (LZ) et que le boîtier est disposé au-dessous ou au-dessus des microphones (M1 à M3).

14. Dispositif de conversation pour conférence à mains libres selon l'une des revendications 6 à 13, caractérisé en ce que plusieurs unités microphone - haut-parleur peuvent être combinées de telle sorte que le microphone devant être raccordé est choisi parmi tous les microphones présents.
